# EUROPÄISCHE PATENTSCHRIFT

(11) **EP 2 180 289 B1**
(45) Veröffentlichungstag und Bekanntmachung des Hinweises auf die Patenterteilung: **06.07.2011**
(21) Anmeldenummer: 09012447.0
(22) Anmeldetag: 01.10.2009
(51) Int. Cl.: G01B 3/28, G01B 3/48

(54) **Gewindeprüfgerät**
Thread testing device
Appareil de contrôle d'un filetage

(30) Priorität: 01.10.2008 DE 202008013121 U; 15.01.2009 DE 102009005160
(43) Veröffentlichungstag der Anmeldung: 28.04.2010
(73) Patentinhaber: Diatest Hermann Költgen GmbH, 64289 Darmstadt (DE)
(72) Erfinder: Otto, Helmut, 63128 Dietzenbach (DE)
(74) Vertreter: Friderichs, Gunther

(56) Entgegenhaltungen:
- DE-U- 1 682 110
- JP-A- 9 061 102
- US-A- 3 015 892
- US-A- 4 519 144

## Beschreibung

### Gebiet der Erfindung

Die Erfindung betrifft ein Gewindeprüfgerät mit einer Maßskala für die Tiefenmessung.

### Hintergrund der Erfindung

Gewindeprüfgeräte sind aus der Praxis bekannt. Es handelt sich dabei um einen einschraubbaren Gewindelehrdorn mit einem Prüfgewinde. Ist beispielsweise das Gewinde zu eng, so lässt sich der Gewindelehrdorn nicht weiter einschrauben.

Um zu kontrollieren, ob ein Gewinde bis zu einer Solltiefe in Ordnung ist, besitzen bekannte Gewindeprüfgeräte eine Skala, mittels der die Einschraubtiefe ablesbar ist.

Bei bekannten Gewindeprüfgeräten dreht sich die Skala beim Einschrauben des Gewindelehrdorns mit. Die Skala kann daher oft schlecht abgelesen werden, oder der Gewindelehrdorn muss zum Ablesen arretiert und herausgeschraubt werden.

Weiter gibt es bekannte Gewindeprüfgeräte mit einer Noniusskala. Dabei wird zumeist die Tiefe über eine Maßskala an der Vorderseite des Gerätes abgelesen, wobei die Teilskalierung sich weiter hinten am Gehäuse befindet. Die Einschraubtiefe lässt sich so nur umständlich ablesen, zumal sich die Skalen beim Einschrauben mitdrehen.

Das Dokument DE 16 82 110 U zeigt einen rohrförmiger-Schieber, der über eine Hülse mit Maßzahlen geschoben wird.

Das Dokument JP 09 0611 02 A zeigt ein

Gewindetiefenmessgerät, welches eine Skala am hinteren Ende des Messdorns aufweist. Das Dokument US 3,015,892 A zeigt eine Hülse mit darin angeordnetem Lehrdern. Das Dokument US 4,519,144 A zeigt ein Gewindetiefenmessgerät, bei welchem sich eine Hülse mit Maßzahlen in ein Gehäuse schiebt. Das Gehäuse dreht sich dabei mit.

### Aufgabe der Erfindung

Der Erfindung liegt demgegenüber die Aufgabe zugrunde, die genannten Nachteile des Standes der Technik zumindest zu reduzieren.

Insbesondere ist es Aufgabe der Erfindung, die Handhabbarkeit eines Gewindeprüfgerätes zu verbessern.

Eine weitere Aufgabe der Erfindung ist es, das Ablesen der Einschraubtiefe zu erleichtern.

### Zusammenfassung der Erfindung

Die Aufgabe der Erfindung wird bereits durch ein Gewindeprüfgerät nach Anspruch 1 gelöst.

Bevorzugte Ausführungsformen und Weiterbildungen der Erfindung sind den abhängigen Ansprüchen zu entnehmen.

Durch den Gewindelehrdorn, der nicht mit dem Gehäuse fest verbunden ist, sondern über einen vorzugsweise rückseitig angeordneten Drehgriff eingeschraubt werden kann, kann das Gehäuse, an welchem eine Maßskala angeordnet ist, beim Eindrehen des Gewindelehrdorns seine Position beibehalten und so die Einschraubtiefe leicht abgelesen werden.

Bei einer Weiterbildung der Erfindung ist der Drehgriff am Gehäuse arretierbar, um je nach Einsatz, auch das Gehäuse als Drehgriff mit verwenden zu können.

Bei einer weiteren Ausführungsform der Erfindung ist die Skala mit Maßzahlen derart arretierbar, dass insbesondere bei schlechter Zugänglichkeit des zu prüfenden Gewindes die Skala arretiert werden kann und das Gewindeprüfgerät heraus geschraubt werden kann. An dem heraus geschraubten Gewindeprüfgerät kann sodann die Tiefe abgelesen werden.

Erfindungsgemäß ist als Maßskala eine Skala mit Maßzahlen mit dem Gewindelehrdorn verschiebbar im Gehäuse angeordnet und das Gehäuse weist ein Sichtfenster zum Ablesen der Maßzahlen auf. Die Skala ist vorzugsweise gegenüber dem Gehäuse nicht drehbar angeordnet, sondern verschiebt sich beim Eindrehen des Gewindelehrdorns lediglich in das Gehäuse des Gewindeprüfgerätes hinein, ohne sich mit zu drehen.

So ist es möglich, die Tiefe unabhängig vom Drehwinkel durch das Sichtfenster anzulesen, und das Sichtfenster kann gleichzeitig eine Noniusskala umfassen, die direkt gegenüber der Tiefenskala angeordnet ist.

Erfindungsgemäß besteht die Skala aus einer Hülse mit Maßzahlen, in der der Gewindelehrdorn angeordnet ist.

Neben einer besonders einfachen Ablesbarkeit wird durch die Erfindung ein Gewindeprüfgerät mit besonders großer Messtiefe bereitgestellt, da die Maßskala im Gehäuse abgelesen wird und so einen großen Hub haben kann.

Der Drehgriff ist vorzugsweise als.rückseitig auf dem Gewindelehrdorn befestigte Hülse ausgebildet, welche in das Gehäuse übergeht, insbesondere im Wesentlichen den gleichen Durchmesser wie das Gehäuse aufweist.

Die Erfindung betrifft des Weiteren ein Gewindeprüfgerät mit einem Gehäuse, einem einschraubbaren Gewindelehrdorn und einer Skala mit Maßzahlen zur Anzeige der Einschraubtiefe des Gewindelehrdorns. Gemäß der Erfindung weist das Gehäuse ein Sichtfenster zum Ablesen der Einschraubtiefe auf, wobei an dem Gehäuse, insbesondere am Sichtfenster, auch eine Noniusskala angeordnet ist.

Im Unterschied zu bekannten Gewindeprüfgeräten, bei denen sich nur die Noniusskala über ein Sichtfenster im Gehäuse ablesen lässt, wird durch die Erfindung das Ablesen der Gewindetiefe allein mit einem Blick auf das Sichtfenster ermöglicht.

Vorzugsweise ist die Skala mit den Maßzahlen auf einer im Gehäuse verschiebbaren Hülse angeordnet.

### Beschreibung der Zeichnung

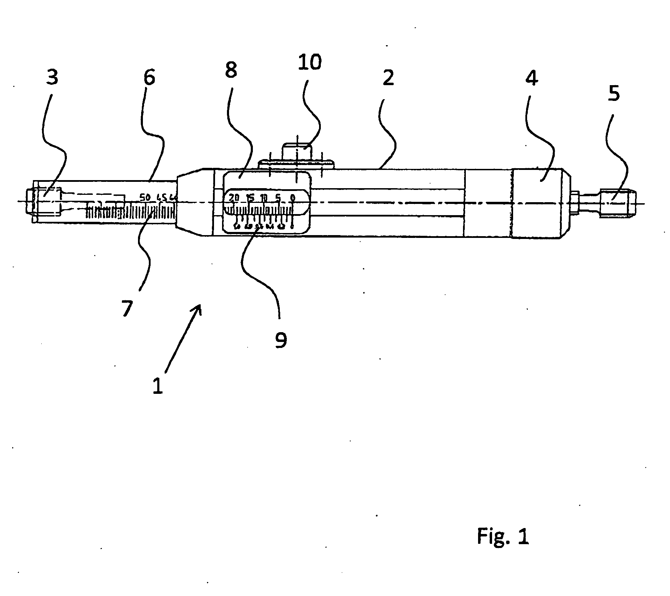

Die Erfindung soll im Folgenden Bezug nehmend auf ein in Fig. 1 schematisch dargestelltes Ausführungsbeispiel näher erläutert werden.

Das Gewindeprüfgerät 1 umfasst ein im Wesentlichen zylinderförmiges Gehäuse 2, in welchem der Gewindelehrdorns 3 drehbar gelagert ist. An der Rückseite ist der Gewindelehrdorn 3 mit einem Drehgriff 4 gekoppelt. Über den Drehgriff 4 kann der Gewindelehrdorn 3 in ein Gewinde (nicht dargestellt) eingeschraubt werden. Rückseitig ist zusätzlich zum Gewindelehrdorn 3 ein Gewindeausschusslehrdorn 5 vorgesehen .

Der Drehgriff 4 kann am restlichen Gehäuse 2 arretiert werden, um auch das gesamte Gehäuse 2 als Drehgriff nutzen zu können.

Zum Ablesen der Einschraubtiefe ist der Gewindelehrdorn 3 in einer Hülse 6 mit einer Skala mit Maßzahlen 7 angeordnet. Die Hülse 6 ist axial beweglich im Gehäuse 2 angeordnet und wird von einer Feder (nicht dargestellt) stets nach vorne unter Spannung gehalten.

Beim Einschrauben des Gewindelehrdorns 3 in ein zu prüfendes Gewinde sitzt die Hülse 6 randseitig neben dem Gewinde auf und wird beim Eindrehen nach hinten in das Gehäuse 2 geschoben.

Das Gehäuse 2 weist ein.Sichtfenster 8 auf, welches auch durch eine einfache Aussparung gebildet sein kann. Im Sichtfenster 8 kann die Skala mit den Maßzahlen 7 abgelesen werden. Gleichzeitig befindet sich am oder im Sichtfenster 8 eine Noniusskala 9, so dass auch die 1/10 mm abgelesen werden können.

Besonders vorteilhaft ist, dass beim Eindrehen des Gewindelehrdorns 3 sich das Gehäuse 2 mit dem Sichtfenster 8, sofern der Drehgriff 4 nicht arretiert ist, nicht mit dreht. Daher kann die Messtiefe auf besonders einfache Weise abgelesen werden.

Über eine Arretiereinrichtung 10, insbesondere eine Arretierschraube kann die Hülse 6 mit den Maßzahlen 7 arretiert werden und sodann die Messtiefe auch nach dem Herausschrauben des Gewindelehrdorns abgelesen werden.

## Patentansprüche

1. Gewindeprüfgerät (1), umfassend einen einschraubbaren Gewindelehrdorn (3), der in einem Gehäuse (2) drehbar angeordnet ist, wobei das Gehäuse (2) eine Maßskala (9) zur Anzeige der Einschraubtiefe des Gewindelehrdorns (3) aufweist,
**dadurch gekennzeichnet, dass** der Gewindelehrdorn (3) über einen Drehgriff (4) einschraubbar ist, der auch drehbar gegenüber dem Gehäuse (2) ist und wobei der Gewindelehrdorn (3) in einer Hülse (6) mit einer Skala mit Maßzahlen (7) angeordnet ist, welche axial beweglich in dem Gehäuse (2) angeordnet ist.

2. Gewindeprüfgerät nach dem vorstehenden Anspruch, **dadurch gekennzeichnet, dass** der Drehgriff (4) am Gehäuse (2) arretierbar ist.

3. Gewindeprüfgerät nach einem der vorstehenden Ansprüche, **dadurch gekennzeichnet, dass** die Skala mit Maßzahlen (7) mit dem Gewindelehrdorn verschiebbar im Gehäuse (2) angeordnet ist und das Gehäuse (2) ein Sichtfenster (8) zum Ablese der Maßzahlen (7) aufweist.

4. Gewindeprüfgerät nach dem vorstehenden Anspruch, **dadurch gekennzeichnet, dass** die Skala mit Maßzahlen (7) gegenüber dem Gehäuse (2) nicht drehbar angeordnet ist.

5. Gewindeprüfgerät nach einem der vorstehenden beiden Ansprüche, **dadurch gekennzeichnet, dass** die Skala mit Maßzahlen (7) gegenüber dem Gehäuse (2) arretierbar ist.

6. Gewindeprüfgerät nach einem der vorstehenden Ansprüche, **dadurch gekennzeichnet, dass** das Gewindeprüfgerät einen Gewindelehrdorn (3) einer Größe kleiner oder gleich M10 aufweist und die Messtiefe mehr als 25, vorzugsweise mehr als 30 und besonders bevorzugt mehr als 45 mm beträgt.

7. Gewindeprüfgerät nach einem der vorstehenden Ansprüche 1 bis 4, **dadurch gekennzeichnet, dass** das Gewindeprüfgerät einen Gewindelehrdorn (3) einer Größe größer als M10 aufweist und die Messtiefe mehr als 30, vorzugsweise mehr als 50 und besonders bevorzugt mehr als 70 mm beträgt.

8. Gewindeprüfgerät nach einem der vorstehenden Ansprüche, **dadurch gekennzeichnet, dass** der Drehgriff (4) als rückseitig auf dem Gewindelehrdorn befestigte Hülse ausgebildet ist.

9. Gewindeprüfgerät nach dem vorstehenden Anspruch, **dadurch gekennzeichnet, dass** der Drehgriff (4) im Wesentlichen den gleichen Durchmesser wie das Gehäuse (2) aufweist.

10. Gewindeprüfgerät nach Anspruch 3, wobei die Maßskala (9) eine Noninsskala ist und insbesondere am Sichtfenster (8) angeordnet ist.

## Claims

1. Screw thread tester, comprising a screwable thread plug which is turnably arranged within a housing, the housing comprising a scale indicating the screw-depth of the thread plug within the housing, wherein the thread plug is screwable by aid of a rotary handle and wherein the rotary handle itself is turnable with respect to the housing and wherein the thread plug is arranged within a bush featuring an index, the bush being axially movable within the housing.

2. Screw thread tester according to claim 1, wherein the rotary handle can be locked at the housing.

3. Screw thread tester according to claim 1, wherein the scale provided with the index can be moved together with the thread plug within the housing and wherein the housing comprises a window allowing the metering of the index.

4. Screw thread tester according to claim 1, wherein the scale is arranged such that it is not turnable with respect to the housing.

5. Screw thread tester according to claim 3 or 4, wherein the scale can be locked with respect to the housing.

6. Screw thread tester according to claim 1, wherein the the screw thread tester comprises a thread plug that is smaller or equal to M10 and wherein a metering depth is bigger than 25 mm, preferably bigger than 30 mm, and especially preferably bigger than 45 mm.

7. Screw thread tester according to one of the claims 1 to 4, wherein the screw thread tester comprises a thread plug that is bigger than M10 an wherein the metering depth is bigger than 30 mm, preferably bigger than 50 mm and especially preferably bigger than 70 mm.

8. Screw thread tester according to claim 1, wherein the turning handle is designed as a bush that is arranged on the terminal end of the thread plug.

9. Screw thread tester according to claim 8, wherein the turning handle has about the same diameter as the housing.

10. Screw thread tester according to claim 1, wherein the housing comprises a window for the metering of the screw-depth and wherein a vernier scale is arranged at the housing, preferably at the window.

## Revendications

1. Appareil de contrôle de filetage, contenant une jauge tampon qui est arrangé de façon rotative dans un boîtier, lequel comprenant une échelle graduée pour indiquer l'engagement de la jauge tampon, **caractérisé en ce que** la jauge tampon peut être vissé à l'aide d'une poignée qui est également pivotante par rapport au boîtier, et dans lequel la jauge tampon est disposé dans un manchon avec des cotes, le manchon étant arrangée de façon mobile en direction axiale.

2. L'appareil de contrôle de filetage selon la revendication 1, **caractérisé en ce que** la poignée est verrouillée sur le boîtier.

3. L'appareil de contrôle de filetage selon l'une des revendications précédentes, **caractérisé en ce que** l'échelle avec des cotes coulissent avec la jauge tampon dans le boîtier, et dans lequel le boîtier contient une fenêtre permettant de lire les cotes.

4. L'appareil de contrôle de filetage selon la revendication précédente, **caractérisé en ce que** l'échelle n'est pas arrangée de façon pivotante par rapport au boîtier.

5. L'appareil de contrôle de filetage selon une des deux revendications précédentes, **caractérisé en ce que** l'échelle peut-être verrouillée par rapport au boîtier.

6. L'appareil de contrôle de filetage selon une des revendications précédentes, **caractérisé en ce que** l'appareil de contrôle de filetage comprend une jauge tampon d'une taille inférieure ou égale à M10 et dans lequel la profondeur du mesurage est de plus de 25 mm, de préférence de plus de 30 mm et particulièrement préféré de plus de 45 mm.

7. L'appareil de contrôle de filetage selon une des revendications 1 à 4, **caractérisé en ce que** l'appareil de contrôle de filetage comprend une jauge tampon d'une taille inférieure à M10 et dans lequel la profondeur du mesurage est de plus de 30 mm, de préférence de plus de 50 mm et particulièrement de plus de 70 mm.

8. L'appareil de contrôle de filetage selon une des revendications précédentes, **caractérisé en ce que** la poignée se présente sous forme d'un manchon attaché à l'arrière sur la jauge tampon.

9. L'appareil de contrôle de filetage selon la revendication précédente, **caractérisé en ce que** la poignée a essentiellement le même diamètre que le boîtier.

10. L'appareil de contrôle de filetage selon une des revendications précédentes, **caractérisé en ce que** le boîtier comprend une fenêtre permettant de lire l'engagement et **en ce qu'**une échelle graduée par vernier est arrangée au boîtier, notamment à la fenêtre.
